# EUROPÄISCHE PATENTSCHRIFT

(11) **EP 0 955 120 B1**
(45) Veröffentlichungstag und Bekanntmachung des Hinweises auf die Patenterteilung: **01.10.2003**
(21) Anmeldenummer: 99890140.9
(22) Anmeldetag: 30.04.1999
(51) Int. Cl.: B23K 10/02, B23K 10/00

(54) **Verfahren und Einrichtung zum teilweisen Anschmelzen von Gegenständen**
Method and apparatus for partially melting objects
Méthode et appareillage pour la fusion partielle d'objets

(30) Priorität: 04.05.1998 AT 28698 U
(43) Veröffentlichungstag der Anmeldung: 10.11.1999
(73) Patentinhaber: Inocon Technologie Gesellschaft m.b.H, 4800 Attnang-Puchheim (AT)
(72) Erfinder: Schwankhart, Gerhard, Dipl.-Ing., 4800 Attnang-Puchheim (AT)
(74) Vertreter: KLIMENT & HENHAPEL

(56) Entgegenhaltungen:
- US-A- 5 239 563
- US-A- 5 296 665
- US-A- 5 773 792
- US-A- 5 852 278

## Beschreibung

Die Erfindung bezieht sich auf ein Verfahren und eine Vorrichtung zum teilweisen Anschmelzen von Gegenständen gemäß dem Oberbegriff des Anspruches 1 und 4.

US 5 296 665 zeigt ein derartiges Verfahren und eine Vorrichtung. Dieses Dokument wird als nächstkommender Stand der Technik angesehen.

Bei bekannten derartigen Verfahren wird ein im wesentlichen kontinuierlich strömendes Plasma verwendet, meist um die Oberfläche von Gegenständen aus Stahl zu härten.

Für andere Verfahren, wie z.B. zum Schweißen, insbesondere Punktschweißen von Feinblechen, oder Herstellen eines Durchbruchs in dünneren metallischen Gegenständen wird meist ein Laserstrahl oder ein Elektronenstrahl verwendet. Dabei ergibt sich jedoch der Nachteil, daß Laserschweißverfahren eine sehr aufwendige Vorbereitung der zu verschweißenden Teile erfordert, die mit hoher Genauigkeit aneinandergefügt sein müssen, um mittels eines Laserstrahles verschweißt werden zu können. Gleiches gilt auch bezüglich der mit Elektronenstrahlen arbeitenden Verfahren. Außerdem ist auch die zur Durchführung solcher Verfahren erforderliche Apparatur in konstruktiver Hinsicht sehr aufwendig.

Ziel der Erfindung ist es, diese Nachteile zu vermeiden und ein Verfahren der eingangs erwähnten Art vorzuschlagen, das eine einfache Bearbeitung von Gegenständen, insbesondere die Herstellung von Punktschweißungen oder das Einbrennen von Durchbrüchen ermöglicht.

Erfindungsgemäß wird dies durch die kennzeichnenden Merkmale des Anspruches 1 erreicht.

Durch die vorgeschlagenen Maßnahmen ist es möglich, mit relativ grob vorgerichteten Teilen diese mittels Punktschweißung miteinander zu verbinden. Im wesentlichen reichen jene Maßnahmen aus, wie sie auch bei der elektrischen Widerstands-Punktschweißung erforderlich sind.

Dabei ist durch die Zündung des Lichtbogens durch Überschreiten der Überschlagsspannung der Anoden-Kathoden-Strecke eine sehr hohe Ausströmgeschwindigkeit des Plasmaimpulses sichergestellt, sodaß dieser mit einer entsprechend hohen kinetischen Energie auf die zu verschweißenden Teile auftrifft. Die auf diese Art erzeugten Plasmaimpulse erreichen sehr hohe Temperaturen von 20 000°C bis 50 000°C und bewirken trotz einer nur kurzen Einwirkzeit von z.B. 10⁻⁵ bis 10⁻¹ sec ein ausreichendes Anschmelzen der aneinander anliegenden Flächen der zu verbindenden Teile und damit eine sichere Verbindung.

Durch die Maßnahmen gemäß dem Anspruch 2 wird die Ausbildung von Oxidschichten an den Werkstücken vermieden, wobei zweckmäßigerweise das zur Erzeugung des Plasmas verwendete Gas, meist Argon oder Helium, gleichzeitig als Schutzgas verwendet wird.

Durch die Maßnahmen des Anspruches 3 ist es möglich mit relativ klein gehaltenen Geräten, bzw. Plasmabrennern das Auslangen zu finden, die mit relativ hoher Leistung kurzzeitig betrieben werden können.

Ein weiteres Ziel der Erfindung ist es, eine Einrichtung zur Durchführung des erfindungsgemäßen Verfahrens vorzuschlagen.

Ausgehend von einer Einrichtung mit einem Plasmabrenner mit einer eine mit einem Gasanschluß verbundenen Kammer durchsetzenden und mit einem elektrischen Anschluß, bzw. einer Spannungsversorgung, in Verbindung stehenden Kathode und einer deren einen Endbereich mit einem Ringspalt umschließenden ringförmigen Anode, die ebenfalls mit einem elektrischen Anschluß. bzw. der Spannungsversorgung, in Verbindung steht und deren koaxial mit der Kathode ausgerichtete Bohrung eine mit der Kammer verbundenen Düse begrenzt und die Anode mit der Kathode elektrisch isoliert in mechanischer Verbindung steht und die Kammer über einen Anschluß mit einer Gasquelle verbindbar ist, werden daher erfindungsgemäß die kennzeichnenden Merkmale des Anspruches 4 vorgeschlagen.

Durch die vorgeschlagenen Maßnahmen wird auf einfache Weise die Erzeugung einzelner Plasmaimpulse sichergestellt. Außerdem ergibt sich durch die Vorkammer das Plasmabrenners auch die Möglichkeit diesen auf die zu verbindenden Werkstücke aufzusetzen, wodurch die Konstanthaltung des Abstandes zwischen den Elektroden und den Werkstücken auf einfache Weise ermöglicht wird. Außerdem ist dadurch auch die Herstellung der einzelnen Schweißpunkte unter einer Schutzgasatmosphäre auf einfachste Weise möglich, da bei Aufrechterhaltung eines Plasmagasstromes dieses Plasmagas, z.B. Argon oder Helium, die Vorkammer füllt.

Mit einer solchen Einrichtung können auch aus einzelnen Schweißpunkten bestehende Nähte hergestellt werden. Es ist in einem solchen Fall lediglich erforderlich, eine Vorschubeinrichtung vorzusehen, die eine Relativbewegung zwischen dem Plasmabrenner und den Werkstücken erzwingt und für eine ständige Abfolge von an die Elektroden des Plasmabrenners angelegten Spannungsimpulsen zu sorgen.

In diesem Zusammenhang ist es vorteilhaft, die Merkmale des Anspruches 5 vorzusehen.

Bei einer solchen Einrichtung ist es auf einfache Weise möglich, den zu bearbeitenden Gegenstand, bzw. Gegenstände mit einer Folge von sehr kurzen Plasmaimpulsen zu beaufschlagen. Dabei kommt es im Zuge der Aufladung der Kondensatorbatterie zu einem Übersteigen der Überschlagsspannung der Anoden-Kathoden-Strecke und damit zur Ausbildung eines Lichtbogens, über den es zu einer Entladung der Kondensatorbatterie kommt. Dabei verlischt der Lichtbogen, sobald die Spannung der Kondensatorbatterie unter die Brennspannung des Lichtbogens fällt. Durch entsprechende Dimensionierung der Ladeschaltung und des Entladekreises der Kondensatorbatterie im Hinblick auf die Zeitkonstanten kann die Brenndauer des Lichtbogens in jedem Zyklus, wie auch die Wiederholfrequenz festgelegt werden. Der auf dieses Weise immer nur sehr kurz brennende Lichtbogen erzeugt Plasmaimpulse, die aufgrund der sehr raschen Erwärmung des umgebenden Gases mit sehr hoher Geschwindigkeit aus der Ausströmöffnung der Kammer des Plasmabrenners austreten und auf die zu verbindenden Gegenstände oder den mit einem Durchbruch zu versehenen Gegenstand auftreffen und aufgrund ihrer hohen Temperaturen für ein Anschmelzen oder Durchschmelzen der Gegenstände, bzw. des Gegenstandes sorgen.

Mit der erfindungsgemäßen Einrichtung lassen sich die für eine schonende Behandlung der zu bearbeitenden Gegenstände erforderlichen kurzen Impulszeiten der Plasmaimpulse von z.B. 10⁻⁵ bis 10⁻¹ sec und eine Wiederholfrequenz von 5 bis 100 Hz, bevorzugt 7 bis 100Hz, erreichen. Durch diese kurzen Einwirkzeiten der einzelnen Plasmaimpulse wird die thermische Beanspruchung der Gegenstände gering gehalten und dadurch die Gefahr des Verziehens der meist sehr dünnen oder dünnwandigen Gegenstände weitgehend vermieden.

Um besonders kurze Plasmaimpulse erzeugen zu können, ist es vorteilhaft die Merkmale des Anspruches 6 vorzusehen. Diese Maßnahmen ermöglichen es, die Zündung des Lichtbogens noch vor Erreichen der Überschlagsspannung der Anoden-Kathoden-Strecke auszulösen, wodurch sich die Brennzeit des Lichtbogens und damit die Brennzeit des Plasmaimpulse extrem kurz halten läßt, ohne daß ein besonders hoher Aufwand zu einer besonders niederohmigen Ausbildung des Entladekreises der Kondensatorbatterie getrieben werden muß.

Grundsätzlich ist es auch möglich statt der Kondensatorbatterie als Spannungsversorgung für den Plasmabrenner auch ein technisches Wechselstromnetz oder einen hochfrequenten Wechselstrom liefernde Spannungsquelle in Verbindung mit einer Phasenanschnittsteuerung zu verwenden. Dabei muß bei aus unterschiedlichen Materialien hergestellten Elektroden sichergestellt sein, daß lediglich gleich polarisierte Halbwellen teilweise durchgeschaltet werden, sodaß sich an den unterschiedlichen Elektroden stets Spannungsimpulse mit jeweils gleicher Polarität angelegt werden und sich im wesentlichen gleiche Verhältnisse wie bei einer Versorgung des Plasmabrenners mit Gleichspannungsimpulsen, z.B. aus einer Kondensatorbatterie, ergeben.

Bei aus gleichen Materialien hergestellten Elektroden können an jeder der beiden Elektroden Impulse mit unterschiedlicher Polarität angelegt werden.

Da bei Plasmabrennern aus Gründen einer längeren Lebensdauer Elektroden in der Regel aus unterschiedlichen Materialien hergestellt und mit stets gleicher Polarität beaufschlagt werden, wird in der Beschreibung und den Ansprüchen allgemein von Anode und Kathode gesprochen.

Insbesondere für Anwendungen, bei denen leistungsstärkere Plasmabrenner erforderlich sind, z.B. bei der Verbindung etwas stärkerer Bleche mit aus einer Reihe von Schweißpunkten gebildeten Schweißnähten, ist es vorteilhaft, die Merkmale des Anspruches 7 vorzusehen.

Durch die vorgeschlagenen Maßnahmen kann mit kleineren Kondensatorbatterien das Auslangen gefunden werden, da eben ein Teil der benötigten Energie vom Netzgerät geliefert wird. Außerdem ergibt sich durch den Anschluß des Werkstückes, bzw. der Werkstücke an den positiven Pol des Netzgerätes der Vorteil einer engen Bündelung des Plasmaimpulses und Konzentration seiner Energie auf eine sehr kleine Fläche. Dadurch kann mit relativ kleinem Energieeinsatz ein sicheres Verschweißen zweier Teile im Bereich einer kleinen Fläche sichergestellt werden und die Erwärmung der umgebenden Randzonen sehr stark minimiert werden, wodurch die Gefahr eines Verzuges der Werkstücke reduziert wird.

Die Erfindung wird nun anhand der Zeichnung näher erläutert. Dabei zeigen:
Fig. 1 einen Schnitt durch eine erfindungsgemäße Einrichtung mit einem Plasmabrenner,
Fig. 2 eine Draufsicht auf den Halter samt Plasmabrenner nach der Fig. 1,
Fig. 3 einen Schnitt durch den Plasmabrenner nach der Fig. 1 und 2 in vergrößertem Maßstab,
Fig. 4 einen Schnitt durch die Kühlmittelkammer des Anoden-Kontaktteiles,
Fig. 5 einen Schnitt durch die Zentrierhülse,
Fig. 6 eine erste Ausführungsform einer Spannungsversorgung für einen Plasmabrenner und
Fig. 7 eine weitere Ausführungsform einer Spannungsversorgung für einen Plasmabrenner.

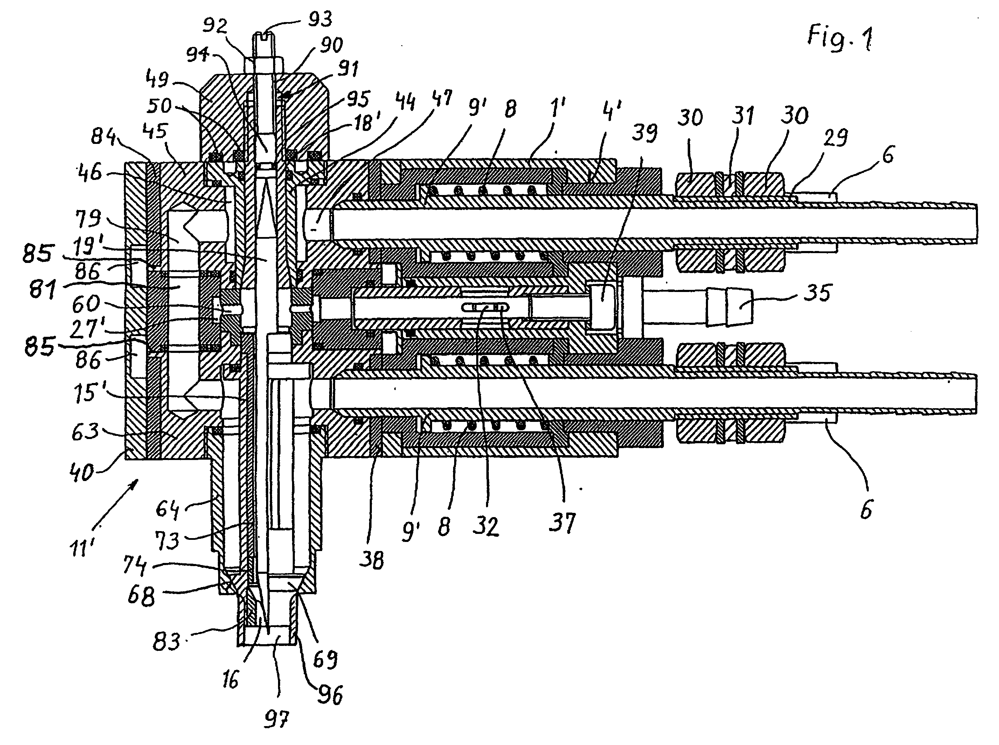

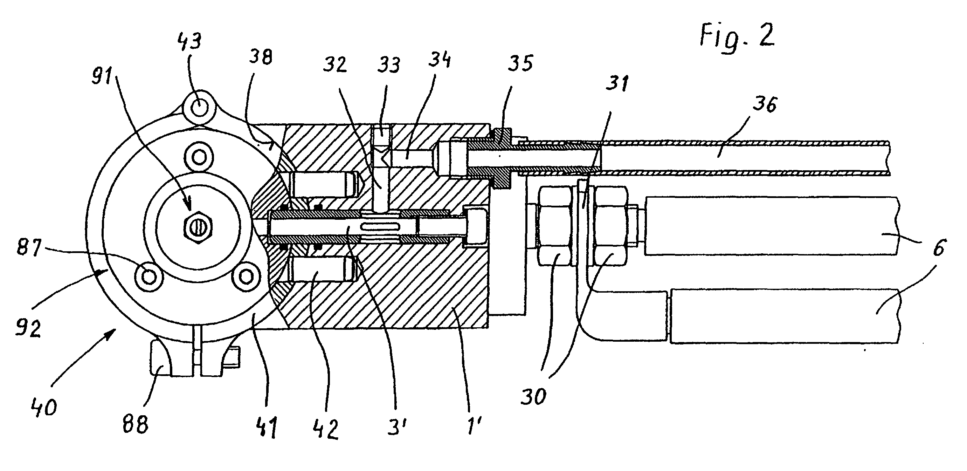

Bei der Ausführungsform nach der Fig. 1 ist ein Halter 1' vorgesehen, der Bohrungen 4' zur Aufnahme der Kontaktstifte 9' aufweist, wobei die Kontaktstifte 9' in axialer Richtung durchbohrt sind. Dabei sind die Kontaktstifte 9' in einem außerhalb des Halters 1' liegenden Bereich mit einem Außengewinde 29 versehen, auf dem Anschlußmuttern 30 aufgeschraubt sind, zwischen denen Kabelschuhe 31 von Anschlußleitungen 8 (Fig. 2) geklemmt sind.

Das hintere Ende der Kontaktstifte 9' ist für den Anschluß von Schläuchen ausgebildet, über die Kühlwasser zuführbar ist.

Weiters ist im Halter 1' eine Gaszuführleitung 3' gehalten, die, wie aus der Fig. 2 zu ersehen ist, über einen radialen Kanal 32, der mit einer Madenschraube 33 nach außen abgeschlossen ist, und eine in diese mündende axiale Bohrung 34, in der eine Schlauchtülle 35 eingeschraubt ist, mit einem Gasschlauch 36 verbunden ist, über den ein zur Erzeugung des Plasmas erforderliches Gas zuführbar ist.

Dabei weist die Gaszuführleitung 3' im Bereich des radialen Kanals 32 Schlitze 37 auf, über die das Gas in das Innere der Gaszuführleitung 3' einströmen kann. Dabei ist die Gaszuführleitung 3' mittels einer in diese eingreifende Schraube 39 in ihrer Lage gesichert.

Wie aus der Fig. 1 zu ersehen ist, ragen die Kontaktstifte 9' in ihrer federbelasteten Ruhestellung über die Stirnfläche 38 des Halters 1' hinaus und greifen in die Mantelfläche eines als Modul aufgebauten Plasamerzeugers 11' ein. Gleiches gilt auch für die Gaszuführleitung 3', die bei montiertem Plasmaerzeuger 11' in diesen eingreift.

Der als Modul aufgebauter Plasmaerzeuger 11' ist mittels einer Rohrschelle 40 gehalten, deren an der Stirnseite 38 des Halters 1' gehaltene feste Teil mit Stiften 42 gehalten ist. Dabei weist die Rohrschelle 40 ein Gelenk 43 auf, deren Achse senkrecht zur Achse des Halters 1' verlaufen.

Beim Plasmaerzeuger 11' ist der Halteteil 18' der Kathode 19' durch eine Spannzange gebildet, die aus einem elektrisch gut leitenden Material hergestellt ist. Diese Spannzange ist in üblicher Weise in einem Aufnehmer 44 gehalten, der in einen Kontaktteil 45 eingeschraubt ist.

Dieser Kontaktteil 45 ist mit einer Kühlmittelkammer 46 versehen, die über einen radialen Kanal 47 mit einer Anschlußöffnung 48 verbunden ist. Dabei fluchtet diese Anschlußöffnung 48 bei im Halter 1' montiertem Plasmaerzeuger 11' mit den Kontaktstiften 9'.

Zum Spannen und Lösen der Spannzange 18' ist eine Spannmutter 49 vorgesehen, die über zwei Dichtungen 50 an der oberen Stirnfläche der Aufnahme 44 abgestützt ist, wodurch ein Austritt von Kühlflüssigkeit vermieden wird, wobei die Aufnahme 44 zur Abdichtung der Kühlmittelkammer 46 ebenfalls über eine Dichtung 51 an dem Kontaktteil 45 abgestützt ist.

Zur weiteren Abdichtung der Kühlmittelkammer des Kontaktteiles 45 ist ein O-Ring 52 vorgesehen, der in einer Nut einer Bohrung 53 eingesetzt ist, die von der Aufnahme 44 durchsetzt ist.

Zur Sicherung der axialen Einstellung der Kathode 19' beim Spannen der Spannzange 18' ist die Spannmutter 49 mit einer durchgehenden Gewindebohrung 90 versehen, in der ein Anschlag 91 eingeschraubt ist, der in die Spannzange 18' eingreift. Dieser Anschlag 91 weist einen glatten Kopf 94 auf, in dem eine umlaufende Nut zur Aufnahme eines O-Ringes 95 eingearbeitet ist, der zur Abdichtung des Inneren der Spannzange 18'dient.

Zur Sicherung der Lage des Anschlages 91, der mittels eines in den stirnseitigen Schlitz 93 eingesetzten Schraubendrehers einstellbar ist, ist eine Kontramutter 92 vorgesehen, die gleichzeitig für eine drehfeste Verbindung zwischen dem Anschlag 91, an dem die Kathode 19' anliegt, und der Spannmutter 49 sorgt.

Durch den Anschlag 91 ist sichergestellt, daß beim Spannen der Spannzange die Kathode 19' von der Spannzange 18' nicht mehr gegenüber der Anode 15' axial bewegt werden kann, da die Spannmutter 49 an der Stirnfläche des Kontaktteiles 45 anliegt und die Anode 15'gegenüber dieser festgelegt ist.

Der Kontaktteil 45, der zur Kontaktierung der Kathode 19' dient, liegt unter Zwischenlage einer Dichtung 54 auf einem Zwischenteil 55, der aus einem elektrisch isolierenden Material, wie z.B. Keramik, hergestellt ist. Dieser Zwischenteil 55 bestimmt die Kammer 27' die über einen radialen Kanal 56 mit einer Anschlußöffnung 57 verbunden ist.

Dabei sind die radialen Kanäle 47 und 56 mit umlaufenden Nuten 58 versehen, in denen O-Ringe 59 angeordnet sind. Diese dienen zur Abdichtung der in diese Kanäle eingreifenden Kontaktstifte 9' bzw. der Gaszuführleitung 3'.

In der Kammer 27' ist ein Verteilring 59' angeordnet, der mit über den Umfang verteilt angeordnete Bohrungen 60 versehen, deren Durchmesser sich in beiden Drehrichtungen mit größer werdendem Winkel zum dem radialen Kanal 56 vergrößert. Dabei ist die axiale Bohrung des Verteilringes 59' von der Kathode 19' durchsetzt. Dabei verbleibt zwischen der Innenwand des Zwischenteiles 55 und dem Verteilring 59' ein Ringraum 61.

Der Zwischenteil 55 ist über eine Dichtung 62 auf einen Anoden-Kontaktteil 63 abgestützt. In diesen Anoden-Kontaktteil 63 ist eine Spannhülse 64 in ein Innengewinde 65 eingeschraubt, wobei eine Dichtung 66 zwischen dem Anoden-Kontaktteil 63 und der Stirnfläche der Spannhülse 64 zwischengelegt ist.

Die Spannhülse 64 weist im Bereich ihres einen Endes eine konische Anlagefläche 67 auf, an der eine gegengleiche kegelige Mantelfläche 68 eines Kopfes 69 einer Anode 15' anliegt, die ebenso wie die Spannhülse 64 und der Anoden-Kontaktteil 63 aus einem elektrisch gut leitenden Material hergestellt ist.

Die Anode 15 liegt mit ihrem vom Kopf 69 abgekehrten Ende mit einem weiteren Kopf 70 auf, der unter Zwischenlage einer Dichtung 71 an einer Schulter des Anoden-Kontaktteiles 63 anliegt. Dabei durchsetzt die Anode 15' eine Kühlmittelkammer 46 des Anoden-Kontaktteiles 63.

Die Anode 15' ist in axialer Richtung durchbohrt, wobei in diese Bohrung 72 eine Hülse 73 aus einem elektrisch isolierenden Material, z.B. Keramik, hergestellt ist und von der Kathode 19' durchsetzt ist.

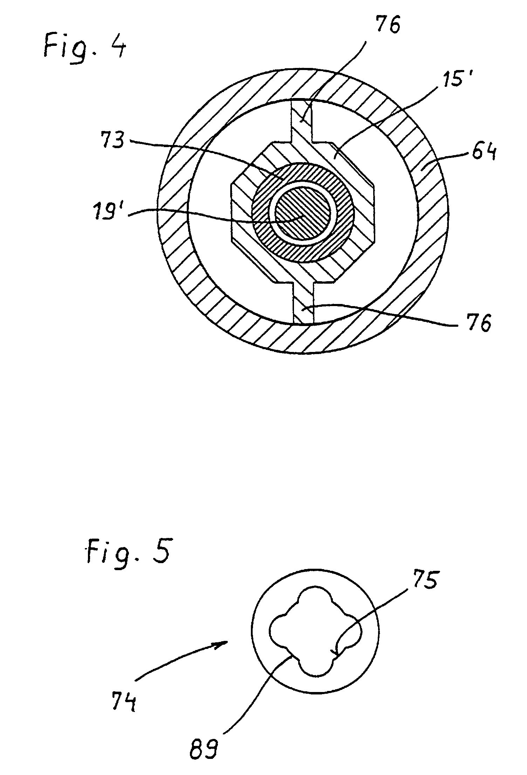

Weiters ist in der Bohrung 72 im der Mündung der Anode 15' nahen Bereich eine Zentrierhülse 74 eingesetzt, die in der Fig. 5 näher dargestellt ist und deren an Führungsrippen 89 vorgesehenen Führungsflächen 75 an der Mantelfläche der Kathode 19' anliegen.

Die Anode 15' weist, wie aus der Fig. 4 zu ersehen ist radial abstehende Leitrippen 76 auf, die sich, wie aus der Fig. 4 zu ersehen ist, von der einen sechseckigen Querschnitt aufweisenden Anode 15' bis zur Innenwand der Spannhülse 64 erstrecken und senkrecht zur Achse des radialen Kanals 47 stehen. Dabei erstrecken sich die Leitrippen 76 vom Kopf 70 weg gegen den Kopf 69 der Anode 15', wobei jedoch zwischen dem Kopf 69 und den Leitrippen 76 ein Strömungsweg 77 verbleibt.

Dadurch wird die Kühlmittelkammer 46, die einerseits vom Anoden-Kontaktteil 63 und der Spannhülse 64 begrenzt wird, durch die Leitrippen 76 unterteilt.

Die beiden Kühlmittelkammern 46 des Kontaktteiles 45 und des Anoden-Kontaktteiles 63 sind über einen Überströmkanal 78 miteinander verbunden.

Dieser Überströmkanal 78 setzt sich im wesentlichen aus axialen Bohrungen 79 in dem Kontaktteil 45, bzw. dem Anoden-Kontaktteil 63 und radialen, zu den radialen Kanälen 47 koaxialen Bohrungen 80 gebildet ist, die in die axialen Bohrungen 79 münden. Dabei ist der Zwischenteil 55 mit einer mit den axialen Bohrungen 79 fluchtenden Bohrung 81 versehen.

Dabei sind im Bereich der Bohrung 81 des Zwischenteiles 55 Dichtungen 82 vorgesehen.

Im Mündungsbereich der Anode 15', ist ein Einsatz 83 vorgesehen, der aus einem verschleißfesten Material, z.B. aus einer Wolfram-Ceroxid-Legierung hergestellt ist und eine Düsenöffnung 16 begrenzt. Dabei ist der aus der Spannhülse 64 vorragende Abschnitt der Anode 15' von einem Ring 96 umgeben, der aus einem verschleißfesten Material hergestellt ist und über die Düsenöffnung 16 der Anode 15' axial vorragt und eine Vorkammer 97 bestimmt.

Die beiden Kontaktteile 45 und 63 sind von Ringen 84 aus einem elektrisch isolierten Material umgeben, bzw. diese sitzen auf Krägen 85 auf.

Wie aus der Fig. 1 zu ersehen ist, weist die Rohrschelle 40 im Bereich der Krägen 85 der Kontaktteile 45 und 63 Ausnehmungen 86 auf, wodurch ein Kurzschluß zwischen den beiden Kontaktteilen 45 und 63 vermieden wird.

Die Kathode 19' ist an ihren beiden Enden kegelig ausgebildet.

Die beiden Kontaktteile 45 und 63 und der Zwischenteil 55 sind mittels der aus der Fig. 2 ersichtlichen Schrauben 87 miteinander verbunden und stellen die Verbindungsteile dar, durch die ein modularer Aufbau des Plasmaerzeugers 11' sichergestellt ist.

Sobald die Kathode 19' abgenutzt ist, so kann der als Modul ausgebildete Plasmaerzeuger 11' durch Lösen der Spannschraube 88 und Öffnen der Rohrschelle 40 ausgebaut werden, wonach die Spannmutter 49 gelöst und die Kathode 19' aus der Spannzange entnommen werden kann. Anschließend kann die Kathode gewendet, oder deren kegelige Enden nachgeschliffen werden. Anschließend kann die Kathode in Bezug auf die Anode 15' mittels einer Lehre eingestellt werden. Anschließend wird der Anschlag 91 bei geöffneter Spannzange 18' eingestellt und danach die Kathode 19' mittels der Spannmutter 49 in der Spannzange 18' wieder fixiert, wonach der Modul 11' wieder montiert werden kann.

Beim Betrieb wird Gas, z.B. Argon, Helium, Stickstoff, od. dgl. in die Kammer 27' eingeblasen und ein Lichtbogen zwischen der Kathode 19' und der Anode 15' durch einen Spannungsimpuls gezündet, der nach kurzer Zeit unter die Brennspannung des Lichtbogens absinkt, sodaß dieser verlöscht. Der sich auf diese Weise ausbildende Plasmaimpuls tritt durch die Düsenöffnung 16 aus, durchsetzt die Vorkammer 97 und trifft auf das, bzw. die zu bearbeitenden Werkstück(e) auf. Diese werden durch die Einwirkung des Plasmaimpulses angeschmolzen, wodurch es je nach der Energie des Plasmaimpulses zum Durchschmelzen eines Durchbruchs, oder zum Anschmelzen zweier zu verschweißender Werkstücke kommt. In letzterem Falle kommt es bei der nachfolgenden Erstarrung nach dem Verlöschen des Plasmaimpulses zu einer sicheren Verbindung der beiden Teile. Dabei werden diese Teile durch die kinetische Energie des mit hoher Geschwindigkeit austretenden Plasmaipulses, wobei Geschwindigkeiten von 2000m/sec erreicht werden, ausreichend zusammengepreßt, um eine sichere Verbindung zu gewährleisten.

Dabei ist durch die Vorkammer 97 auf einfache Weise eine Beaufschlagung der zu bearbeitenden Werkstücke mit Plasmaimpulsen unter einer Schutzgasatmosphäre möglich. Dazu ist es lediglich erforderlich den Plasmabrenner 11' mit einem im wesentlichen konstanten Strom von Plasmagas, z.B. Argon, Helium, Stickstoff, zu versorgen, wobei Stickstoff nur eingesetzt werden kann, wenn das zu bearbeitende Werkstück auch im angeschmolzenen Zustand eine Stickstoffatmosphäre verträgt.

Weiters kann der Plasmabrenner 11' bei der Herstellung der einzelnen Schweißpunkte mit der Stirnseite des Ringes 96 auf das zu bearbeitende Werkstück aufgesetzt werden, wodurch gleichzeitig auch der Abstand zwischen den Elektroden 15', 19' und der Oberseite des Werkstückes definiert ist.

Für besondere Anwendungen, z.B. das Herstellung von Durchbrüchen mit sehr kleinen Durchmessern können Düsen 16 mit sehr kleinen Durchmessern bis herab zu Durchmessern von z.B. 10µm vorgesehen werden. Da bei solchen Plasmabrennern 11' die Leistung entsprechend herabgesetzt werden kann, kann bei solchen Plasmabrennern auf die Kühlkanäle verzichtet werden.

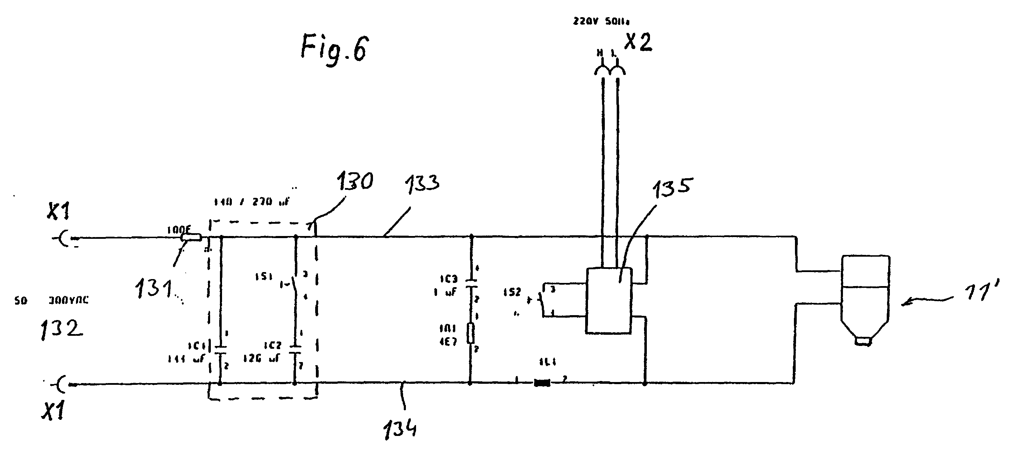

Eine Spannungsversorgung für einen Plasmabrenner 11' nach den Fig. 1 bis 5 ist in der Fig. 6 dargestellt, wobei die Spannungsversorgung zur Erzeugung eines Impulsplasmas vorgesehen ist.

Dabei ist eine Kondensatorbatterie 130 über einen Ladewiderstand 131 mit den Anschlüssen X1 einer regelbaren Gleichspannungsquelle 132 verbunden. Die Kondensatorbatterie 130 weist einen fest angeschlossenen Kondensator 1C1 und einen über einen Schalter 1S1 zu diesem parallel zuschaltbaren Kondensator 1C2 auf, wobei es sich in beiden Fällen auch um Gruppen von Kondensatoren handeln kann.

Diese Kondensatorbatterie 130 ist über Anschlußleitungen 133, 134 mit dem Plasmabrenner 11', bzw. dessen in der Fig. 6 nicht dargestellten Kathode und Anode verbunden.

Parallel zur Kondensatorbatterie 130 ist ein R/C-Glied geschaltet, das durch einen Kondensator 1C3 und einen widerstand 1R1 gebildet ist. Dieses R/C-Glied bildet in Verbindung mit der in der Anschlußleitung 134 geschalteten Drossel 1L1 einen HF-Sperrkreis, der zum Schutz der Kondensatorbatterie 130 vor HF-Signalen vorgesehen ist.

Weiters ist noch die Ausgänge eines Zündgerätes 135 an die Anschlußeitungen 133, 134 angeschlossen. Dieses Zündgerät 135 ist eingangsseitig mit einer Wechselspannungsquelle X2 verbunden und mit einem Triggerschalter 1S2 versehen, durch dessen Betätigung ein Zündimpuls auslösbar ist.

Beim Betrieb kommt es zur Aufladung der Kondensatorbatterie 130 entsprechend der eingestellten Spannung der Gleichspannungsquelle 132, die z.B. zwischen 50V und 300V einstellbar ist, und der durch die Kapazität der Kondensatorbatterie 130 und die Leitungswiderstände und den Ladewiderstand mitbestimmten Zeitkonstante.

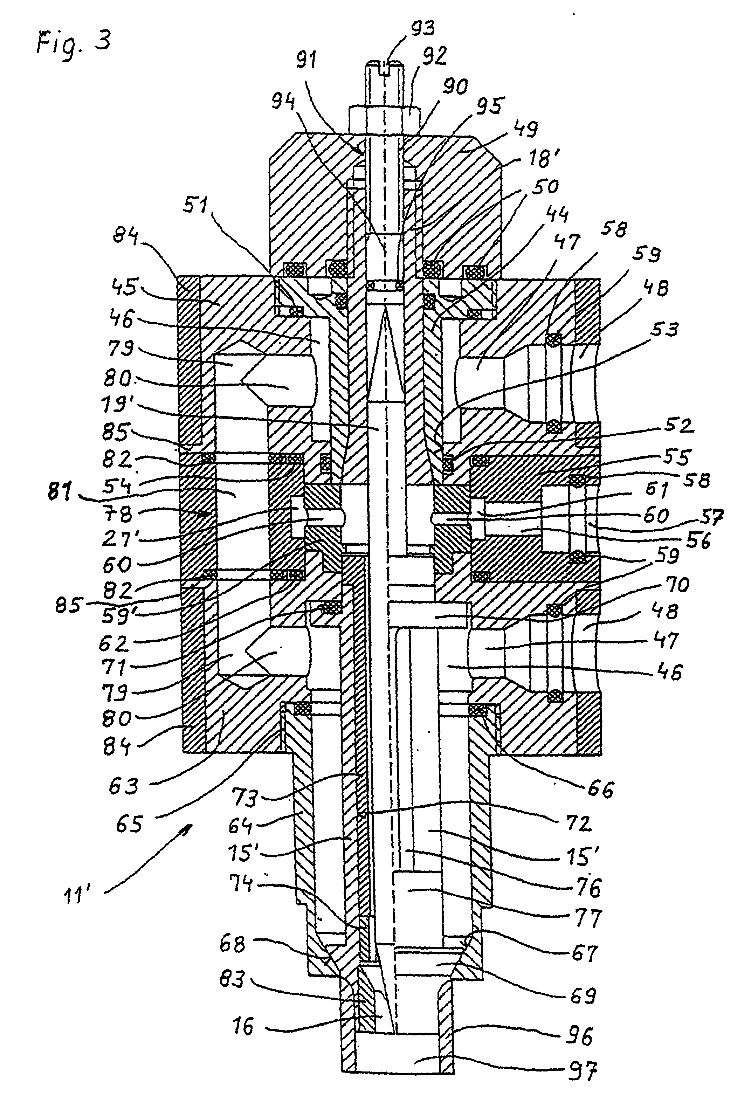

Erreicht die Kondensatorbatterie 130 eine Spannung, die der Überschlagsspannung der Anoden-Kathoden-Strecke 15', 19' des Plasmabrenners 11' entspricht, so kommt es zum Zünden eines Lichtbogens zwischen Anode 15' und Kathode 19' (Fig. 1, Fig. 3) und damit zur Bildung von Plasma im Mündungsbereich der Anode 15' des Plasmabrenners 11'.

Gleichzeitig entlädt sich die Kondensatorbatterie 130 entsprechend der durch deren Kapazität und den Leitungswiderständen und dem Widerstand des Lichtbogens gegebenen Zeitkonstante. Sinkt durch diese Entladung die Spannung der Kondensatorbatterie 130 unter die Brennspannung des Lichtbogens ab, so erlischt dieser und die Kondensatorbatterie 130 lädt sich wieder auf, wodurch sich der beschrieben Vorgang wiederholt und sich eine Frequenz ergibt, die durch Lade- und Entlade-Zeitkonstanten bestimmt ist. Dabei ist der Betrieb des Zündgerätes nicht erforderlich.

Für bestimmte Anwendungen kann es erwünscht sein, den Zündzeitpunkt des Lichtbogens genau zu bestimmen oder einen solchen vor Erreichung der Überschlagsspannung der Anoden-Kathoden-Strecke 15', 19' auszulösen, um besonders kurze Plasmaimpulse erzeugen zu können.

In diesem Fall wird durch Betätigung des Triggerschalters 1S2 ein Zündimpuls ausgelöst, der zur Zündung eines Lichtbogens zwischen der Anode 15' und der Kathode 19' des Plasmabrenners 11' führt, ohne daß die Kondensatorbatterie 130 eine der Überschlagsspannung dieser Strecke entsprechende Spannung erreicht hat. Auf diese Weise kann auch das Tastverhältnis, das z.B. zwischen 1:10 und 1:100 und darüber hinaus gewählt werden kann, entsprechend verändert werden und das Verhältnis zwischen der Brenndauer des Lichtbogens und dessen Brennpause während eines Zyklusses im Sinne einer Verlängerung der Brennpause verändert werden, da die Energie der Zündimpulse des Zündgerätes 135 zwar zum Zünden des Lichtbogens, nicht aber zu dessen Aufrechterhaltung ausreicht, wenn die Spannung der Kondensatorbatterie 130 unter der Brennspannung des Lichtbogens abgesunken ist.

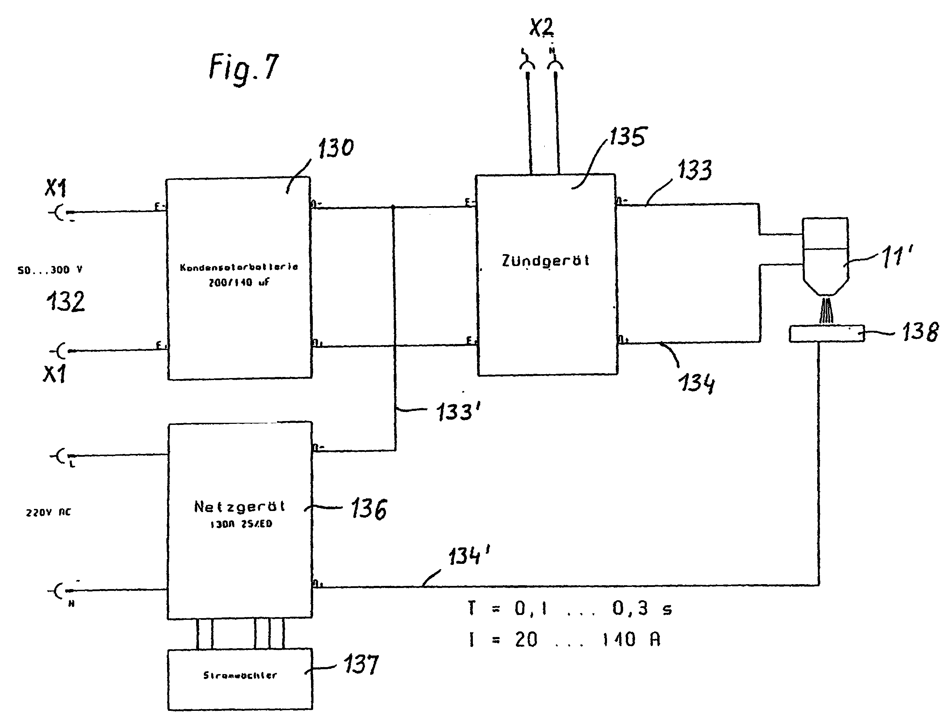

Die Ausführungsform der Spannungsversorgung für den Plasmabrenner 11' nach der Fig. 7 unterscheidet sich von jener nach der Fig. 6 nur dadurch, daß zusätzlich zur Kondensatorbatterie 130 ein Netzgerät 136 vorgesehen ist, das an ein Wechselspannungsnetz angeschlossen und mit einer Gleichrichterschaltung versehen ist. Dabei ist auf die Darstellung des Sperrkreises und der Drossel verzichtet.

Dabei ist die an den negativen Pol des Ausgangs des Netzgerätes angeschlossene Anschlußleitung 133'mit an den negativen Pol der Kondensatorbatterie 130 angeschlossenen Anschlußleitung 133 verbunden und die an den positiven Pol des Netzgerätes 136 angeschlossene Anschlußleitung 134' ist mit einem Werkstück 138 verbunden.

Weiters ist ein Stromwächter 137 an das Netzgerät 136 angeschlossen.

Im Betrieb liefert das Netzgerät 136, sobald ein Lichtbogen zwischen der Anode 15' und der Kathode 19' gezündet ist, ebenfalls Strom in den Plasmabrenner 11', wobei der Stromkreis für das Netzgerät über die Kathode 19 des Plasmabrenners, das Plasma und das Werkstück 138, sowie die Anschlußleitungen 133', 133, 134' geschlossen ist.

Sobald der Lichtbogen im Plasmabrenner 11' aufgrund des Absinkens der Spannung der Kondensatorbatterie 130 unter die Brennspannung des Lichtbogens erlischt, ist auch der Stromkreis für das Netzgerät 136 unterbrochen, dessen Ausgangsspannung nicht ausreicht, um einen Lichtbogen zwischen der Kathode und dem Werkstück 138 aufrecht zu erhalten.

Es wird daher auch bei einer Spannungsversorgung gemäß der Fig. 7 mit Impulsplasma gearbeitet.

## Patentansprüche

1. Verfahren zum örtlichen Aufheizen von Gegenständen, insbesondere von Dünnblechen, durch Beaufschlagung der Gegenstände mit einem mittels eines zwischen zwei Elektroden gezündeten Lichtbogens erzeugten Plasma, wobei das Plasma durch Anlegen eines die Überschlagsspannung der Strecke zwischen den Elektroden (15',19') übersteigenden Spannungsimpulses erzeugt wird, **dadurch gekennzeichnet, daß** die zu verbindenden Gegenstände mit einer Reihe von aufeinanderfolgenden Plasmaimpulsen beaufschlagt werden, wobei die Gegenstände gegenüber den Elektroden bewegt und die Elektroden in einem gleichbleibenden Abstand von den Gegenständen gehalten werden und eine Wiederholfrequenz der Plasmaimpulse von 5 bis 100Hz vorgesehen ist.

2. Verfahren nach Anspruch 1, **dadurch gekennzeichnet, daß** die Bearbeitung in einer Schutzgasatmosphäre erfolgt.

3. Verfahren nach Anspruch 1 oder 2, **dadurch gekennzeichnet, daß** der Plasmaimpuls eine Dauer von ca. 10⁻⁵ bis 10⁻¹ sec, vorzugsweise von 10⁻⁴ bis 10⁻¹sec, aufweist.

4. Einrichtung zur Durchführung des Verfahrens nach einem der Ansprüche 1 bis 3, mit einem Plasmabrenner mit einer eine mit einem Gasanschluß verbundenen Kammer (27')durchsetzenden und mit einem elektrischen Anschluß, bzw. einer Spannungsversorgung, in Verbindung stehenden Kathode (19') und einer deren einen Endbereich mit einem Ringspalt umschließenden ringförmigen Anode (15'), die ebenfalls mit einem elektrischen Anschluß. bzw. der Spannungsversorgung, in Verbindung steht und deren koaxial mit der Kathode (19') ausgerichtete Bohrung eine mit der Kammer (27') verbunden Düse (16) begrenzt und die Anode (15') mit der Kathode (19') elektrisch isoliert in mechanischer Verbindung steht und die Kammer (27') über einen Anschluß (35) mit einer Gasquelle verbindbar ist, **dadurch gekennzeichnet, daß** eine lediglich Spannungsimpulse liefernde Spannungsversorgung vorgesehen ist, wobei die Spannungsimpulse die Überschlagsspannung der Anoden-Kathoden-Strecke (15', 19') übersteigen und die Düse (16) von einem axial vorragenden Ring (96) umgeben ist, dessen Inneres eine Vorkammer (97) definiert.

5. Einrichtung nach Anspruch 4, **dadurch gekennzeichnet, daß** die Spannnungsversorgung durch eine Kondensatorbatterie (130) gebildet ist, die mit einer Ladeschaltung (131, 132) verbunden und ausgangsseitig mit der Anode (15') und der Kathode (19') des Plasmabrenners (11') verbunden ist.

6. Einrichtung nach Anspruch 5, **dadurch gekennzeichnet, daß** an die Anode (15') und die Kathode (19') zusätzlich ein separates Zündgerät (135) angeschlossen ist.

7. Einrichtung nach Anspruch 5 oder 6, **dadurch gekennzeichnet, daß** die Spannungsversorgung weiters ein mit einer Gleichrichterschaltung versehenes Netzgerät (136) aufweist, wobei dessen negativer Pol mit dem negativen Pol des Ausganges der Kondensatorbatterie (130) verbunden und dessen positiver Pol mit dem bzw. den Werkstücken (138) verbunden ist.

## Claims

1. A method for locally heating objects, in particular thin sheet metal, by charging the objects by means of a plasma ignited between two electrodes, with the plasma being produced by a voltage pulse exceeding the arc-over voltage of the gap between the electrodes (15', 19'), **characterized in that** the objects to be joined are charged with a number of successive plasma pulses, with the objects being moved with respect to the electrodes and the electrodes being kept at a constant distance from the objects and a repetition frequency of the plasma pulses of 5 to 100 Hz being provided.

2. A method as claimed in claim 1, **characterized in that** the machining occurs in a protective gas atmosphere.

3. A method as claimed in claim 1 or 2, **characterized in that** the plasma pulse has a duration of approx. 10⁻⁵ to 10⁻¹ seconds, preferably 10⁻⁴ to 10⁻¹ seconds.

4. A device for performing the method as claimed in one of the claims 1 to 3, with a plasma torch with a cathode (19') penetrating a chamber (27'), which is in connection with a gas connection, and being in connection with an electric connection or a voltage supply and with a ring-shaped anode (15') which encloses its one end section with an annular gap and which is also in connection with an electric connection or the voltage supply and whose bore in coaxial alignment with the cathode (19') delimits a nozzle (16) which is connected with the chamber (27') and the anode (15') is in mechanical connection with the cathode (19') in an electrically insulated manner and the chamber (27') is connectable with a gas source by way of a connection (35), **characterized in that** a voltage supply is provided which merely supplies voltage pulses, with the voltage pulses exceeding the arc-over voltage of the anode-to-cathode gap (15', 19') and the nozzle (16) being enclosed by an axially projecting ring (96) whose interior defines a pre-chamber (97).

5. A device as claimed in claim 4, **characterized in that** the voltage supply is formed by a capacitor battery (130) which is connected with a charging circuit (131, 132) and is connected on the output side with the anode (15') and the cathode (19') of the plasma torch (11').

6. A device as claimed in claim 5, **characterized in that** a separate ignition set (135) is additionally connected to the anode (15') and the cathode (19').

7. A device as claimed in claim 5 or 6, **characterized in that** the voltage supply is further provided with a mains apparatus (136) having a rectifier circuit, with its negative pole being connected with the negative pole of the output of the capacitor battery (130) and its positive pole being connected with the subject(s) (138).

## Revendications

1. Méthode pour la fusion partielle d'objets, notamment de tôles fines, moyennant application sur les objets d'un plasma produit par un arc électrique amorcé entre deux électrodes, ce plasma étant créé par application d'une impulsion de tension dépassant la tension d'éclatement de la distance entre les électrodes (15', 19'), **caractérisée en ce que** les objets à relier sont projetés par une série d'impulsions de plasma se succédant, les objets étant déplacés par rapport aux électrodes, celles-ci étant maintenues à une distance constante par rapport à ces objets et une fréquence de répétition des impulsions de plasma de 5 à 100 Hz étant prévue.

2. Méthode selon la revendication 1, **caractérisée en ce que** le traitement se fait sous atmosphère contrôlée.

3. Méthode selon l'une quelconque des revendications 1 ou 2, **caractérisée en ce que** l'impulsion de plasma a une durée approximative de 10⁻⁵ à 10⁻¹ secondes, préférentiellement de 10⁻⁴ à 10⁻¹ secondes.

4. Appareillage destiné à l'exécution de la méthode selon l'une quelconque des revendications 1 à 3, moyennant un chalumeau à plasma et une cathode (19') passant par une chambre (27') reliée à un raccord à gaz et à un raccordement électrique ou une alimentation électrique, par ailleurs une anode annulaire (15') moulant l'une des extrémités de celle-là avec une fente annulaire, l'anode étant également raccordée à un raccordement électrique ou à l'alimentation électrique, son alésage aligné de manière coaxiale par rapport à la cathode (19') délimitant une tuyère (16) reliée à la chambre (27') et isolant l'anode (15') de la cathode (19'), étant en contact mécanique et la chambre (27') pouvant être raccordée à une source de gaz par l'intermédiaire d'un raccord (35), **caractérisé en ce qu'**une alimentation de tension ne fournissant que des impulsions de tension est prévue, les impulsions de tension dépassant la tension d'éclatement de la distance anode - cathode (15', 19') et la tuyère (16) étant entourée d'un anneau (96) faisant axialement saillie, dont l'intérieur définit une préchambre (97).

5. Appareillage selon la revendication 4, **caractérisé en ce que** l'alimentation de tension consiste en une batterie de condensateurs (130) reliée à un circuit de charge (131, 132) et, côté sortie, à l'anode (15') et à la cathode (19') du chalumeau à plasma (11').

6. Appareillage selon la revendication 5, **caractérisé en ce que** par ailleurs un appareil d'amorçage (135) indépendant est relié à l'anode (15') et à la cathode (19').

7. Appareillage selon l'une quelconque des revendications 5 ou 6, **caractérisé en ce que** l'alimentation de tension comprend un bloc secteur (136) équipé d'un circuit redresseur, dont le pôle négatif est raccordé au pôle négatif de la sortie de la batterie de condensateurs (130) et le pôle positif à la pièce ou aux pièces à travailler (138).
